# EUROPÄISCHE PATENTSCHRIFT

(11) **EP 2 809 956 B1**
(45) Veröffentlichungstag und Bekanntmachung des Hinweises auf die Patenterteilung: **20.01.2016**
(21) Anmeldenummer: 13700908.0
(22) Anmeldetag: 22.01.2013
(51) Int. Cl.: F16B 13/00

(54) **ANKERSYSTEM, INSBESONDERE HINTERSCHNITTANKERSYSTEM**
ANCHOR SYSTEM, IN PARTICULAR UNDERCUT ANCHOR SYSTEM
SYSTÈME D'ANCRAGE, EN PARTICULIER SYSTÈME D'ANCRAGE À CONTRE-DÉPOUILLE

(30) Priorität: 31.01.2012 DE 102012201293
(43) Veröffentlichungstag der Anmeldung: 10.12.2014
(73) Patentinhaber: HILTI Aktiengesellschaft, 9494 Schaan (LI)
(72) Erfinder: SCHMIDT, Peer, 88131 Lindau (DE); APPL, Jörg, 6800 Feldkirch (AT); KHANDOZHKO, Serhey, CH-9470 Buchs (CH)
(74) Vertreter: Hilti Aktiengesellschaft Corporate Intellectual Property
(86) Internationale Anmeldenummer: PCT/EP2013/051112
(87) Internationale Veröffentlichungsnummer: WO 2013/113586

(56) Entgegenhaltungen:
- DE-A1- 3 731 819
- DE-A1- 10 316 632

## Beschreibung

Die vorliegende Erfindung betrifft ein Ankersystem, insbesondere ein wegkontrolliert spreizendes Ankersystem, beispielsweise ein Hinterschnittankersystem, gemäß dem Oberbegriff des Anspruches 1 und ein Verfahren zum Befestigen eines Hinterschnittankersystems gemäß dem Oberbegriff des Anspruches 11.

Hinterschnittanker mit einem Ankerbolzen mit einem Spreizkörper und Angriffsmitteln sowie eine den Ankerbolzen umgebende Spreizhülse dienen dazu, Bauteile an einem Bauwerk oder an Gestein zu befestigen. Hierzu wird in das Bauwerk, z. B. eine Betonwand oder eine Betondecke, eine Bohrung eingearbeitet und anschließend der Hinterschnittanker in die Bohrung eingeschoben.

Nach dem Einschieben des Hinterschnittankers in die Bohrung wird mittels eines Setzgerätes die Spreizhülse in eine Rotationsbewegung versetzt und zusätzlich auf die Spreizhülse eine axiale Druckkraft in Richtung zu dem Spreizkörper aufgebracht. Aufgrund der axialen Druckkraft wird an dem Ende der Spreizhülse im Bereich des Spreizkörpers die Spreizhülse aufgespreizt, das heißt radial nach außen bewegt, und zusätzlich durch die Rotationsbewegung der Spreizhülse der Werkstoff des Bauteils abgetragen bzw. abgefräst. Dadurch kann mittels der aufgespreizten Spreizhülse ein Hinterschnitt an dem Werkstoff des Bauteils und dadurch eine formschlüssige Verbindung zwischen der aufgespreizten Spreizhülse und dem Werkstoff des Bauteils hergestellt werden. Aufgrund des Aufspreizens der Spreizhülse führt die Spreizhülse eine axiale Bewegung in Richtung zu dem Spreizkörper relativ zu dem Ankerbolzen aus. Dabei darf die Spreizhülse nur um ein vorgegebenes Maß bzw. eine vorgegebene Länge in Richtung zu dem Spreizkörper bewegt werden bis zu einer axialen Endlage. Hierzu ist der Ankerbolzen mit einer Markierung versehen, die vor dem Einführen und Aufspreizen von der Spreizhülse verdeckt ist. Beim Einschieben der Spreizhülse in Richtung zu dem Spreizkörper kommt an der axialen Endlage diese Markierung zum Vorschein und ist damit für den Anwender sichtbar. Bei der Sichtbarkeit dieser Markierung ist der Setzvorgang des Hinterschnittankers abzubrechen, das heißt, das Setzgerät ist abzuschalten und es darf keine axiale Druckkraft mehr auf die Spreizhülse aufgebracht werden. Ein zu weites axiales Einschieben der Spreizhülse hat negative Auswirkungen auf die Stand- und Tragfähigkeit des Hinterschnittankers. Aus diesem Grund ist es beim Setzen des Hinterschnittankers zwingend erforderlich, dass von dem Anwender das Erreichen der axialen Endlage in aufwendiger Weise genau überwacht wird, das heißt, ständig zu prüfen ist, ob die Markierung sichtbar ist beim axialen Einschieben der Spreizhülse.

Die DE 37 31 819 A1 zeigt einen Spreizdübel bzw. Hinterschnittanker mit einem Ankerbolzen an dessen zylindrischen Schaft sich in Setzrichtung eine kegelige Erweiterung anschließt und der Schaft an dem dieser Erweiterung abgewandten Ende Angriffsmittel zur Lastaufnahme trägt, wobei der Ankerbolzen von einer relativ dazu verschiebbaren, zumindest teilweise vom setzungsrichtungsseitigen Ende her, längs geschlitzten Spreizhülse umgeben ist, deren Innendurchmesser dem Außendurchmesser des Schaftes entspricht und die Spreizhülse an ihrem in Setzrichtung vorderen Ende einen umlaufenden Schneidzahn aufweist.

Die Aufgabe der vorliegenden Erfindung besteht deshalb darin, ein Ankersystem, beispielsweise Hinterschnittankersystem und ein Verfahren zum Befestigen eines Hinterschnittankersystems zur Verfügung zu stellen, bei der eine axiale Endlage der Spreizhülse exakt und zuverlässig erfasst werden kann.

Diese Aufgabe wird gelöst mit einem Ankersystem, beispielsweise Hinterschnittankersystem, umfassend einen Ankerbolzen mit einem Spreizkörper, vorzugsweise wenigstens ein Angriffsmittel an dem Ankerbolzen oder an der Spreizhülse zur Lastaufnahme, eine den Ankerbolzen umgebende Spreizhülse, ein Mittel zur Erfassung einer axialen Endlage der Spreizhülse an dem Spreizkörper beim Aufspreizen und axialen Bewegen der Spreizhülse, wobei das Mittel einen Sensor zur Erfassung der axialen Endlage umfasst. In vorteilhafter Weise braucht damit beim Setzen des Ankers, insbesondere Hinterschnittankers, das Erreichen der axialen Endlage nicht mehr optisch mit den Augen vom Anwender überwacht zu werden, sondern die axiale Endlage kann von dem Sensor erfasst werden. Dadurch ist eine besonders exakte Erfassung der axialen Endlage möglich und es kann eine besonders sichere und zuverlässige Setzung des Ankers ermöglicht werden.

Das Ankersystem ist bevorzugt ein Hinterschnittankersystem, insbesondere ein selbstschneidendes Hinterschnittankersystem, also ein System, bei dem der Anker selbst eine Hinterschneidung im Bohrloch erzeugen kann. Es kann aber auch ein nicht-selbstschneidendes Hinterschnittankersystem vorgesehen werden, bei dem der Anker in ein bereits hinterschnitten gebohrtes Bohrloch eingebracht wird. Grundsätzlich kann die Erfindung alle wegkontrolliert spreizenden Anker umfassen. Demgemäss kann das Ankersystem auch ein Einschlagankersystem sein.

In einer zusätzlichen Ausführungsform ist der Sensor ein optischer, magnetischer, mechanischer, induktiver oder kapazitiver Sensor und/oder das Mittel umfasst einen Prozessor, z. B. einen Mikrocontroller, und/oder einen Datenspeicher. Mittels des Prozessors können die von dem Sensor oder einer Einrichtung zum Lesen einer Identifizierungseinrichtung erfassten Daten verarbeitet werden und mit dem Datenspeicher können diese Daten gespeichert werden, beispielsweise zum späteren Auslesen oder zur Überwachung von Setzvorgängen von unterschiedlichen Ankern.

In einer ergänzenden Variante ist an dem Ankerbolzen ein Sensorelement angeordnet, welches von dem Sensor erfassbar ist.

In einer zusätzlichen Ausführungsform ist das Sensorelement bei einem optischen Sensor eine Markierung oder ein Code oder ist bei einem magnetischen Sensor ein Permanentmagnet oder bei einem mechanischen Sensor eine mechanisch erfassbare Geometrie, z. B. Aussparung, oder ist bei einem kapazitiven Sensor eine Platte eines Kondensators. Bei einer Markierung oder einem Code als Sensorelement ist diese Markierung oder der Code von dem optischen Sensor nur erfassbar, sofern die Markierung oder der Code an dem Ankerbolzen nicht von der Ankerhülse abgedeckt ist. Beispielsweise bei einem Permanentmagneten wird von dem Sensor der Abstand zu dem Permanentmagneten erfasst und bei einem Unterschreiten eines vorgegebenen Abstandes zu dem Permanentmagneten ist die axiale Endlage erreicht, insbesondere sofern der Sensor an dem Setzgerät angeordnet oder ausgebildet ist.

In einer zusätzlichen Ausführungsform umfasst das Ankersystem ein Sensorgerät und das Mittel ist an einem gesonderten Sensorgerät angeordnet. Das Sensorgerät ist ein zusätzliches, insbesondere leicht tragbares, Bauteil, in Ergänzung zu dem Anker mittels welchem unabhängig von dem Setzgerät die axiale Endlage von dem Anwender überprüft und überwacht werden kann. Hierzu umfasst das Sensorgerät vorzugsweise auch eine Energiespeichereinheit, zum Beispiel eine Batterie, zum Betrieb des Sensors und vorzugsweise des Prozessors sowie des Datenspeichers in dem Sensorgerät.

In einer zusätzlichen Variante umfasst das Ankersystem ein Setzgerät und das Mittel ist an dem Setzgerät angeordnet. Dadurch ist kein zusätzliches Bauteil, wie ein Sensorgerät, erforderlich und die Mittel sind in das Setzgerät integriert. Insbesondere kann dabei das Setzgerät dahingehend ausgebildet sein, dass bei einem Erreichen der axialen Endlage das Setzgerät automatisch bzw. selbstständig abgeschaltet wird und dadurch eine axiale Bewegung der Spreizhülse über die axiale Endlage hinaus ausgeschlossen ist.

In einer zusätzlichen Ausgestaltung umfasst ein Anker, insbesondere Hinterschnittanker, den Ankerbolzen und die Spreizhülse und der Anker, insbesondere der Ankerbolzen oder die Spreizhülse, weist eine Identifizierungseinrichtung, z. B. einen Barcode oder einen RFID-Chip, auf. Mittels der Identifizierungseinrichtung können unterschiedliche Anker identifiziert werden und dadurch ist es möglich, mittels des Setzgerätes oder des Sensorgerätes die von dem Sensor erfassten Daten bezüglich des entsprechend identifizierten Ankers abzuspeichern. Dies ermöglicht es, den Setzvorgang entsprechend zu protokollieren und dadurch ggf. eine Abnahme des Setzvorgangs des Ankers durch einen Prüfer zu vermeiden. Ein Arbeiter bzw. Anwender kann während des Setzvorganges den Setzvorgang elektronisch speichern, sodass dadurch die zuverlässige und sichere Setzung des Setzankers bis zur axialen Endlage aufgrund der gespeicherten Daten nachweisbar ist.

In einer ergänzenden Ausführungsform weist das Sensorgerät oder das Setzgerät mit dem Mittel eine Einrichtung zum Lesen der Identifizierungseinrichtung auf. Vor dem Setzen des Ankers wird im Allgemeinen mittels der Einrichtung die Identifizierungseinrichtung ausgelesen. Die Einrichtung ist bei einem Barcode beispielsweise ein optischer Sensor und bei einem RFID-Chip ein RFID-Transponder.

Zweckmäßig ist mittels einer axialen Bewegung der Spreizhülse relativ zum Spreizkörper aufgrund einer konischen Geometrie des Spreizkörpers die Spreizhülse aufspreizbar und/oder aufgrund einer Rotationsbewegung der Spreizhülse ist der Werkstoff an dem Bohrloch mittels der aufgespreizten Spreizhülse abtragbar. Sofern das Ankersystem ein Hinterschnittankersystem ist, wird die axiale Bewegung der Spreizhülse relativ zum Spreizkörper vorzugsweise dadurch bewirkt, dass die Spreizhülse über den axial festen Spreizkörper geschoben wird. Ist das Ankersystem ein Einschlagankersystem, kann die axiale Bewegung der Spreizhülse relativ zum Spreizkörper vorzugsweise dadurch bewirkt werden, dass der Ankerbolzen mit dem Spreizkörper tiefer in die axial feste Spreizhülse eingetrieben wird. Bei einem Hinterschnittankersystem sind die Angriffsmittel zum Befestigen eines Bauteils zweckmässigerweise durch ein in den Ankerbolzen eingearbeitetes Gewinde, insbesondere Aussengewinde, gebildet. Bei einem Einschlagankersystem hingegen sind die Angriffsmittel zum Befestigen eines Bauteils vorzugsweise durch ein in die Spreizhülse eingearbeitetes Gewinde, insbesondere Innengewinde gebildet.

In einer ergänzenden Ausgestaltung besteht der Ankerbolzen und/oder der Spreizkörper und/oder das wenigstens eine Angriffsmittel wenigstens teilweise, insbesondere vollständig, aus Metall, z. B. Stahl, und/oder mit dem Ankersystem ist ein in dieser Schutzrechtsanmeldung beschriebenes Verfahren ausführbar.

Erfindungsgemäßes Verfahren zur Befestigung eines Hinterschnittankersystems, insbesondere eines in dieser Schutzrechtsanmeldung beschriebenen Hinterschnittankersystems, mit den Schritten: Einführen eines Hinterschnittankers in ein Bohrloch, Verbinden des Hinterschnittankers mit einem Setzgerät, Aufbringen eines Drehmomentes mit dem Setzgerät auf eine Spreizhülse, so dass die Spreizhülse in eine Rotationsbewegung gebracht wird, Aufbringen einer axialen Druckkraft auf die Spreizhülse, sodass die Spreizhülse axial in Richtung zu dem Spreizkörper bewegt wird und die Spreizhülse von dem Spreizkörper aufgespreizt wird, Abbrechen der axialen Bewegung und Rotationsbewegung der Spreizhülse, wenn eine vorgegebenen axiale Endlage der Spreizhülse relativ zu einem Ankerbolzen erreicht wird, wobei die axiale Endlage mit einem Sensor erfasst wird.

Insbesondere wird mit dem Sensor ein Sensorelement an dem Ankerbolzen, insbesondere optisch, magnetisch, mechanisch, induktiv oder kapazitiv, erfasst und/oder der Sensor wird mit elektrischem Strom betrieben.

In einer ergänzenden Variante wird mit der aufgespreizten rotierenden Spreizhülse das Bauwerk an dem Bohrloch abgetragen und dadurch ein Hinterschnitt in das Bauwerk eingearbeitet.

Zweckmäßig wird zwischen der aufgespreizten Spreizhülse und/oder dem Spreizkörper einerseits und dem Bauwerk an dem Hinterschnitt andererseits eine formschlüssige Verbindung hergestellt.

In einer ergänzenden Variante steht der Sensor in Wirkverbindung mit dem Setzgerät und bei Erreichen der von dem Sensor erfassten vorgegebenen axiale Endlage der Spreizhülse relativ zu einem Ankerbolzen wird das Setzgerät automatisch abgeschaltet. Beim Setzvorgang und Einschieben der Spreizhülse wird somit beim Erreichen der axialen Endlage das Setzgerät automatisch abgeschaltet, sodass dadurch kein Material oder Stoff an dem Bauwerk mehr abgetragen werden kann und dadurch ein weiteres axiales Verschieben der Spreizhülse relativ zum dem Ankerbolzen verhindert ist. Dadurch wird ein Bewegen der Spreizhülse über die axiale Endlage hinaus vermieden, sodass dadurch Fehler aufgrund eines zu weiten Einschiebens der Spreizhülse im Wesentlichen ausgeschlossen sind beim Setzen des Hinterschnittankers.

In einer ergänzenden Variante wird eine Identifizierungseinrichtung, z. B. ein Barcode oder ein RFID-Chip, an einem Hinterschnittanker von einer Einrichtung ausgelesen und in Abhängigkeit von den ausgelesenen Daten werden die von dem Sensor erfassten Daten ausgewertet.

Zweckmäßig werden die von dem Sensor erfassten Daten, insbesondere Daten bezüglich der vorgegebenen axialen Endlage, für den mittels der Identifizierungseinrichtung identifizierten Hinterschnittanker gespeichert, z. B. in einem Datenspeicher in einem Sensorgerät oder dem Setzgerät. Die von dem Sensor erfassten Daten, insbesondere bezüglich der axiale Endlage, können in dem Datenspeicher gespeichert werden und insbesondere dahingehend, dass diese einem entsprechenden Hinterschnittanker gemäß der Zuordnung mittels der Identifizierungseinrichtung zugeordnet sind. Dadurch kann das sichere Setzen des Hinterschnittankers von einem Anwender mittels des Setzgerätes oder Sensorgerätes elektronisch protokolliert werden.

In einer weiteren Ausführungsform umfasst das wenigstens eine Angriffsmittel ein Gewinde an dem Ankerbolzen und/oder eine Beilagscheibe und/oder eine Mutter.

Insbesondere ist das wenigsten eine Angriffsmittel im Bereich eines zweiten Endes des Ankerbolzens ausgebildet.

In einer weiteren Ausführungsform sind der Ankerbolzen und die Spreizhülse koaxial zueinander ausgerichtet.

In einer ergänzenden Variante entspricht die Rotationsachse der Rotationsbewegung der Spreizhülse einer Längsachse des Ankerbolzens.

Im Nachfolgenden werden Ausführungsbeispiele der Erfindung unter Bezugnahme auf die beigefügten Zeichnungen näher beschrieben. Es zeigt:
- Fig. 1: einen Längsschnitt eines Hinterschnittankers,
- Fig. 2: den Hinterschnittanker gemäß Fig. 1 nach dem Einschieben in eine Bohrung und nach dem Aufspreizen der Spreizhülse,
- Fig. 3: den Hinterschnittanker gemäß Fig. 1 nach dem Befestigen eines Bauteils,
- Fig. 4: den Hinterschnittanker gemäß Fig. 1 mit einem Setzgerät vor dem Einschieben in eine Bohrung,
- Fig. 5: den Hinterschnittanker gemäß Fig. 1 nach dem Aufspreizen der Spreizhülse mit dem Setzgerät und
- Fig. 6: eine perspektivische Teilansicht des Hinterschnittankers und eines Sensorgerätes.

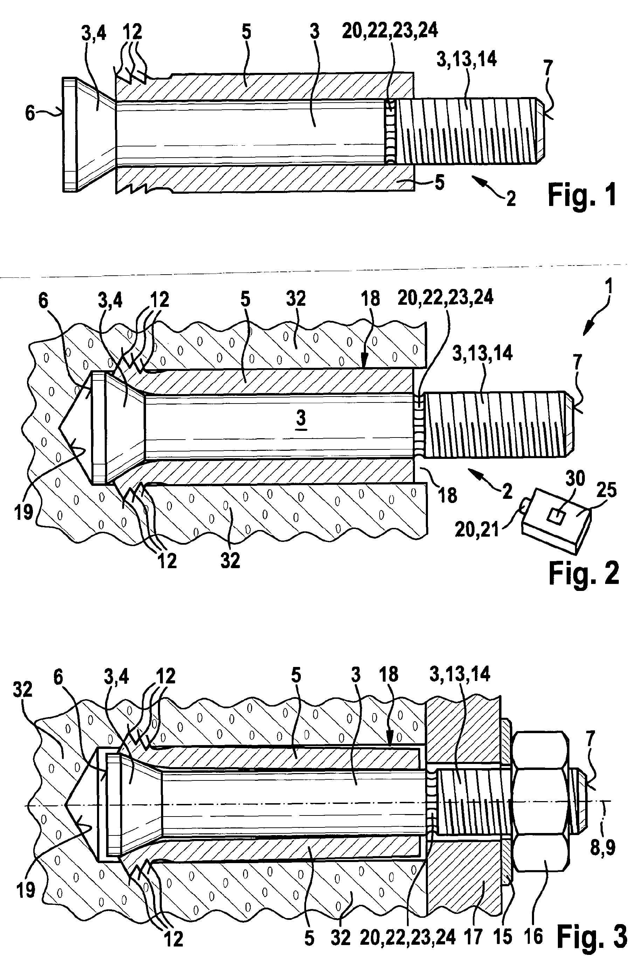

Ein in Fig. 1 bis 6 dargestellter Hinterschnittanker 2 dient dazu, um ein Bauteil 17 an einem Bauwerk 32 zu befestigen. In dem Bauwerk 32 ist eine Bohrung 18 bzw. ein Bohrloch 18 eingearbeitet und zum Befestigen des Bauteils 17 ist der Hinterschnittanker 1 in diese Bohrung 18 einzuführen Das Bauwerk 32 ist beispielsweise eine Betonwand oder eine Betondecke eines Gebäudes.

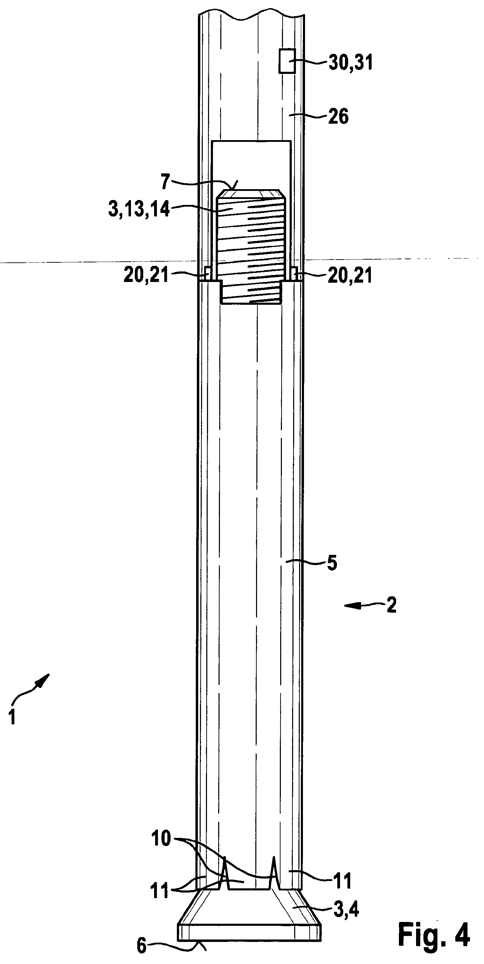

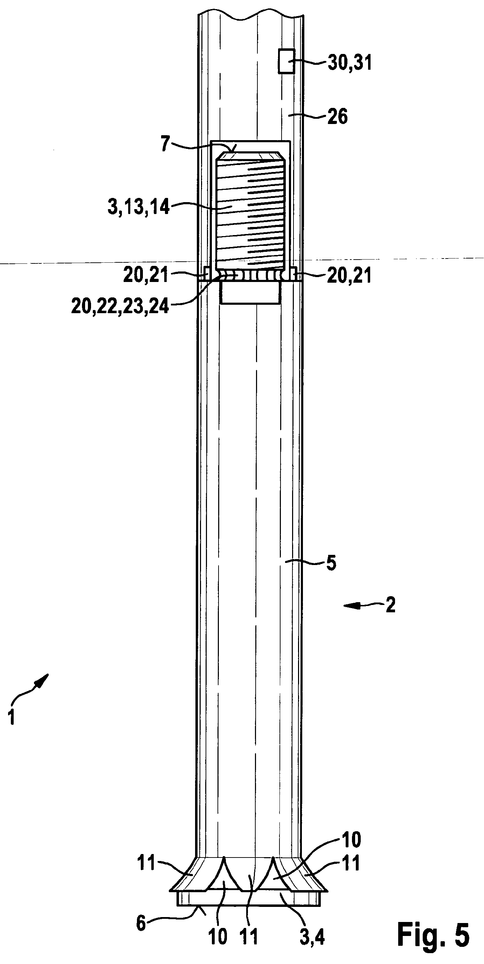

Der Hinterschnittanker 1 umfasst einen Ankerbolzen 3. Der Ankerbolzen 3 weist ein erstes Ende 6 und ein zweites Ende 7 auf. Beim Einführen des Hinterschnittankers 2 in ein Bohrloch 18 eines Bauwerks 32 wird das erste Ende 5 in das Bohrloch 18 eingeführt und ein zweites Ende 7 des Ankerbolzens 3 bleiben außerhalb des Bohrloches 18 (Fig. 2). Einteilig mit dem Ankerbolzen 3 ist am ersten Ende 6 ein konischer Spreizkörper 4 ausgebildet. An dem Ankerbolzen 3 ist koaxial eine Spreizhülse 5 angeordnet, welche den Ankerbolzen 3 umhüllt. Die Spreizhülse 5 weist im Bereich des ersten Endes 6 des Ankerbolzens 3 Längsschlitze 10 in Richtung einer Längsachse 9 des Ankerbolzens 3 auf, so dass aufgrund der axialen Längsschlitze 10 die Spreizhülse 5 Spreizsegmente 11 aufweist (Fig. 4 und 5).

Im Bereich des zweiten Endes 7 des Ankerbolzens 3 sind drei Angriffsmittel 13 zum Befestigen des Bauteils 17 nach der Befestigung des Hinterschnittankers 2 in dem Bohrloch 18 angeordnet. Die Angriffsmittel 13 sind ein in den Ankerbolzen 3 eingearbeitetes Gewinde 14, eine Beilagscheibe 15 und eine Mutter 16. Die Mutter 16 weist ein nicht dargestelltes Innengewinde auf, welches in das Außengewinde 14 an dem Ankerbolzen 3 eingreift.

Zum Setzen des Hinterschnittankers 2 ist in das Bauwerk 32 zunächst mittels eines Bohrers ein Bohrloch 18 in einer genau vorgegebenen Länge einzuarbeiten. Anschließend wird im Allgemeinen das Bohrloch 18 mittels Druckluft gereinigt und der in Fig. 1 dargestellte Hinterschnittanker 2 in die Bohrung 18 eingeschoben (Fig. 2). Mittels eines in Fig. 4 und 5 nur teilweise dargestellten Setzgerätes 26 wird anschließend die Spreizhülse in eine Rotationsbewegung um eine Rotationsachse 8 versetzt, wobei die Rotationsachse 8 der Längsachse 9 des Ankerbolzens 3 und der Spreizhülse 5 entspricht. Zusätzlich wird auf die Spreizhülse 5 eine Druckkraft in Richtung zu einem Bohrlochgrund 19 oder dem konischen Spreizkörper 4 aufgebracht Aufgrund dieser axialen Druckkraft wird die Spreizhülse 5 im Bereich des Spreizkörpers 4 aufgespreizt, das heißt radial nach außen verformt. Dabei weist die Spreizhülse 5 mehrere Längsschlitze 10 auf, sodass sich separate Spreizsegmente 11 aufspreizen. Ferner sind die Spreizsegmente 11 mit Schneidezähnen 12 (nur in Fig. 1 bis 3 dargestellt), versehen. Aufgrund der Rotationsbewegung der Spreizhülse 5 können sich die Schneidezähne 12 bzw. die Spreizsegmente 11 in das Material des Bauwerks 32 einarbeiten und dieses abfräsen, sodass an dem Bauwerk 32 im Bereich der Schneidezähne 12 und der Spreizsegmente 11 ein Hinterschnitt entsteht und dadurch eine formschlüssige Verbindung zwischen der Spreizhülse 5 und dem Material des Bauwerkes 32. Dabei darf die Spreizhülse 5 nur um ein vorgegebenes Maß bzw. um eine vorgegebene Länge relativ in axialer Richtung zu dem Ankerbolzen 3 beim Setzen bewegt werden. Hierzu weist der Ankerbolzen 3 einen Code 24 bzw. eine Markierung 23 als Sensorelement 22 auf, welche auch das Mittel 20 bildet. Vor dem Einführen des Hinterschnittankers 2 in das Bohrloch 18 sind diese Markierungen 23 von der Spreizhülse 5 verdeckt. Die Markierungen 23 sind somit nicht sichtbar. Erst bei der axialen Bewegung der Spreizhülse 5 relativ zu dem Ankerbolzen 3 werden die Markierungen 23 sichtbar.

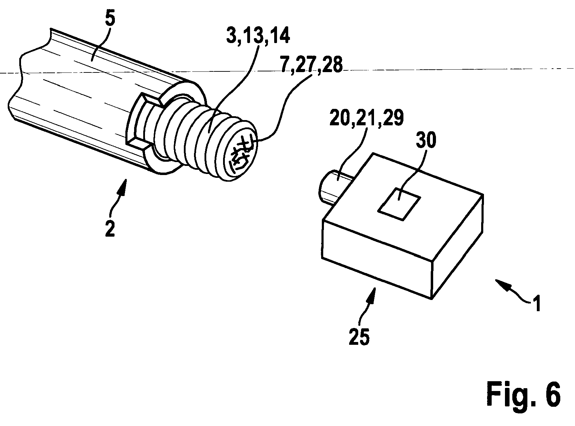

Ein Sensorgerät 25 (Fig. 2 und 6) als tragbares Bauteil weist zur Energieversorgung eine Batterie, einen Prozessor zur Verarbeitung von Daten und einen Datenspeicher auf. Ferner ist das Sensorgerät 25 mit einem optischen Sensor 21 als Mittel 20 zur Erfassung der axialen Endlage der Spreizhülse 5 versehen. Befindet sich die Markierung 23 vollständig außerhalb der Spreizhülse 5, befindet sich die Spreizhülse 5 in der axialen Endlage. Diese axiale Endlage kann mittels des optischen Sensors 21 erfasst werden und anschließend wird mittels einer Anzeigeeinrichtung 30, zum Beispiel einer optischen und/oder akustischen Anzeigeeinrichtung 30, ein Signal ausgegeben. Beispielsweise wird von der Anzeigeeinrichtung 30 ein rotes Blinksignal sowie ein akustischer Ton als Piepston ausgesendet. Während des Setzvorganges mit den Setzgerät 26 kann damit sehr exakt mittels des Sensorgerätes 25 die axiale Endlage der Spreizhülse 5 erfasst werden. Beim Erreichen der axialen Endlage ist vom Anwender das Setzgerät 26 abzuschalten, das heißt die Rotationsbewegung der Spreizhülse 5 wird abgebrochen und ferner darf auch keine axiale Druckkraft mehr auf die Spreizhülse 5 aufgebracht werden. Der Setzvorgang des Hinterschnittankers 2 ist damit vorschriftsmäßig beendet und abgeschlossen. Dabei bildet der Hinterschnittanker 2 zusammen mit dem Sensorgerät 25 ein Hinterschnittankersystem 1.

Nach der Beendigung des Setzvorgangs kann ein zu befestigendes Bauteil mittels der Mutter 16 und der Beilagscheibe 15 an dem Ankerbolzen 3 befestigt werden. Dabei bewegt sich aufgrund der auf den Ankerbolzen 3 aufgebrachten axialen Zugkraft der Spreizkörper 4 geringfügig weg von dem Bohrlochgrund 19 (Fig. 3) und der Spreizkörper 4 verspreizt zusammen mit der aufgespreizten Spreizhülse 5 bzw. den Spreizsegmenten 11 die abgefräste Hinterschneidung an dem Bauwerk 32, sodass dadurch eine sehr sichere und zuverlässige formschlüssige Verbindung zwischen dem Hinterschnittanker 2 und dem Bauwerk 32 entsteht.

In Fig. 4 und 5 ist ein zweites Ausführungsbeispiel des Hinterschnittankersystems 1 dargestellt. Im Nachfolgenden im Wesentlichen nur die Unterschiede zu dem Hinterschnittankersystem 1 gemäß dem ersten Ausführungsbeispiel in Fig. 2 beschrieben. Der optische Sensor 21 und die Anzeigeeinrichtung 30 sind nicht an einem gesonderten Sensorgerät 25 integriert oder eingebaut, sondern sind in das Setzgerät 26 eingebaut. Dabei besteht eine Wirkverbindung zwischen den Mitteln 20 zur Erfassung der axialen Endlage, das heißt dem optischen Sensor 21, dem Prozessor und dem Datenspeicher. Beim Erreichen der axialen Endlage wird selbstständig das Setzgerät 26 abgeschaltet. Dadurch kann in vorteilhafter Weise ein Fehler während des Setzvorganges vermieden werden, bei welchem in unzulässiger Weise die Spreizhülse 5 über die axiale Endlage hinaus eingeschoben ist. Bei einem Abschalten des Setzgerätes 26 wird die Rotationsbewegung der Spreizhülse 5 beendet und dadurch kann die Spreizhülse 5 im Wesentlichen auch nicht mehr axial in Richtung zu dem Bohrlochgrund 19 bewegt oder verschoben werden, da der Werkstoff des Bauwerkes 32 nicht mehr abgefräst werden kann. Das Setzgerät 26 weist ferner auch eine Kommunikationseinheit 31 zur Datenübertragung auf. Werden mittels des Setzgerätes 26 unterschiedliche Hinterschnittanker 2 gesetzt, können die mittels des optischen Sensors 21 erfassten Daten nicht nur in dem Setzgerät 26 gespeichert, sondern mittels der Kommunikationseinheit 31 auch auf anderen elektronischen Einheiten, zum Beispiel einem Laptop-Computer übertragen und gespeichert werden. Eine derartige Kommunikationseinheit 31 kann auch das Sensorgerät 25 mit der gleichen Funktionsweise aufweisen.

In Fig. 6 ist ein zusätzliches Ausführungsbeispiel des Hinterschnittankers 2 dargestellt. Der Hinterschnittanker 2 weist an dem zweiten Ende 7 eine als Barcode 28 ausgebildete Identifizierungseinrichtung 27 auf. Mittels des Barcodes 28 und einer Einrichtung 29 zum Lesen des Barcodes 28 bzw. der Identifizierungseinrichtung 27 kann der Hinterschnittanker 2 und/oder der Typ des Hinterschnittankers 2 erfasst und in dem Sensorgerät 25 gespeichert werden. Dabei ist die Einrichtung 29 zum Lesen der Identifizierungseinrichtung 27 zugleich auch der optische Sensor 21. Abweichend hiervon können der optische Sensor 21 und die Einrichtung 29 auch gesonderte Elemente sein (nicht dargestellt). In analoger Weise zu dem in Fig. 6 dargestellten Sensorgerät 25 kann auch das Setzgerät 26 mit der Einrichtung 29 versehen sein und die nachfolgend beschriebene Funktionsweise des Sensorgerätes 25 kann auch an dem Setzgerät 26 ausgeführt sein.

Vor dem Setzen des Hinterschnittankers 2 wird mittels der Einrichtung 29 der Typ von Hinterschnittanker 2 bzw. der Hinterschnittanker 2 erfasst und anschließend wird in dem Datenspeicher des Sensorgerätes 25 der Setzvorgang gespeichert, das heißt, die von dem optischen Sensor 21 erfassten Daten werden bezüglich des identifizierten Hinterschnittankers 2 gespeichert. Dadurch kann ein Setzvorgang protokolliert und auch das Erreichen der axialen Endlage entsprechend protokolliert werden in elektronischer Form. Darüber hinaus können in dem Datenspeicher für unterschiedliche Hinterschnittanker 2 oder unterschiedliche Typen von Hinterschnittankern 2 die entsprechende Daten bezüglich der axialen Endlage gespeichert sein und dadurch ist es möglich, dass die von dem optischen Sensor 21 erfassten Daten mit den hinterlegten Daten in dem Datenspeicher verglichen werden, um eine optimale Berechnung und Erfassung der axialen Endlage des Hinterschnittankers 2 zu erreichen. Mittels der Kommunikationseinheit 31 können die vielen und/oder unterschiedlichen mit dem Setzgerät 26 gesetzten Hinterschnittanker 2 gespeicherten Daten bezüglich der entsprechenden Hinterschnittanker 2 ausgelesen werden. Dadurch kann auch für eine Vielzahl von gesetzten Hinterschnittankern 2 nach der Beendigung des Setzvorgangs an dem Bauwerk 32 das korrekte Erreichen der axialen Endlage gespeichert werden und ist dadurch elektronisch protokolliert.

Insgesamt betrachtet sind mit dem erfindungsgemäßen Hinterschnittankersystem 1 und dem erfindungsgemäßen Verfahren zum Befestigen des Hinterschnittankersystems 1 wesentliche Vorteile verbunden. Ein optischer Sensor 21 erfasst die axiale Endlage der Spreizhülse 5 beim Setzen bzw. Befestigen des Hinterschnittankers 2 in einem Bohrloch 18 an dem Bauwerk 32. Dadurch können in vorteilhafter Weise Fehler einer manuellen Ablesung durch den Anwender vermieden werden und es ist dabei nicht nur eine genauere Erfassung der axialen Endlage möglich, sondern das Setzgerät 26 kann beim Erreichen der axialen Endlage auch automatisch abgeschaltet werden und die erfassten Daten bezüglich einer korrekten Erreichung der axialen Endlage können in einem Datenspeicher gespeichert und dadurch später auch entsprechend durch das Auslesen mittels einer Kommunikationseinheit entsprechend auf anderen Einrichtungen, zum Beispiel einem Laptop-Computer, gespeichert werden zur Protokollierung.

## Patentansprüche

1. Ankersystem, beispielsweise Hinterschnittankersystem (1), umfassend
- einen Ankerbolzen (3) mit einem Spreizkörper (4),
- eine den Ankerbolzen (3) umgebende Spreizhülse (5),
- vorzugsweise wenigstens ein Angriffsmittel (13) an dem Ankerbolzen (3) oder an der Spreizhülse (5) zur Lastaufnahme,
- ein Mittel (20) zur Erfassung einer axialen Endlage der Spreizhülse (5) an dem Spreizkörper (4) beim Aufspreizen und axialen Bewegen der Spreizhülse (5),
**dadurch gekennzeichnet, dass**
das Mittel (20) einen Sensor (21) zur Erfassung der axialen Endlage umfasst.

2. Ankersystem nach Anspruch 1,
**dadurch gekennzeichnet, dass**
der Sensor (21) ein optischer, magnetischer, mechanischer, induktiver oder kapazitiver Sensor (21) ist
und/oder
das Mittel einen Prozessor, z. B. einen Mikrocontroller, und/oder einen Datenspeicher umfasst.

3. Ankersystem nach Anspruch 1 oder 2,
**dadurch gekennzeichnet, dass**
an dem Ankerbolzen (3) ein Sensorelement (22) angeordnet ist, welches von dem Sensor (21) erfassbar ist.

4. Ankersystem nach Anspruch 3,
**dadurch gekennzeichnet, dass**
das Sensorelement (22) bei einem optischen Sensor (21) eine Markierung (23) oder ein Code (24) ist oder bei einem magnetischen Sensor ein Permanentmagnet ist oder bei einem mechanischen Sensor eine mechanisch erfassbar Geometrie, z. B. Aussparung, ist oder bei einem kapazitiven Sensor eine Platte eines Kondensators ist.

5. Ankersystem nach einem oder mehreren der vorhergehenden Ansprüche,
**dadurch gekennzeichnet, dass**
das Ankersystem ein Sensorgerät (25) umfasst und das Mittel (20) an einem gesonderten Sensorgerät (25) angeordnet ist.

6. Ankersystem nach einem oder mehreren der vorhergehenden Ansprüche,
**dadurch gekennzeichnet, dass**
das Ankersystem ein Setzgerät (26) umfasst und das Mittel (20) an dem Setzgerät (26) angeordnet ist.

7. Ankersystem nach einem oder mehreren der vorhergehenden Ansprüche,
**dadurch gekennzeichnet, dass**
ein Anker, insbesondere ein Hinterschnittanker (2), den Ankerbolzen (3) und die Spreizhülse (5) umfasst und der Anker, insbesondere der Ankerbolzen (3) oder die Spreizhülse (5), eine Identifzierungseinrichtung (27), z. B. einen Barcode (28) oder einen RFID-Chip, aufweist.

8. Ankersystem nach Anspruch 7,
**dadurch gekennzeichnet, dass**
das Sensorgerät (25) oder das Setzgerät (26) mit dem Mittel (20) eine Einrichtung (29) zum Lesen der Identifzierungseinrichtung (27) aufweist.

9. Ankersystem nach einem oder mehreren der vorhergehenden Ansprüche,
**dadurch gekennzeichnet, dass**
mittels einer axialen Bewegung der Spreizhülse (5) relativ zum Spreizkörper aufgrund einer konischen Geometrie des Spreizkörpers (4) die Spreizhülse (5) aufspreizbar ist
und/oder
aufgrund einer Rotationsbewegung der Spreizhülse (5) der Werkstoff an dem Bohrloch (18) mittels der aufgespreizten Spreizhülse (5) abtragbar ist.

10. Ankersystem nach einem oder mehreren der vorhergehenden Ansprüche,
**dadurch gekennzeichnet, dass**
der Ankerbolzen (3) und/oder der Spreizkörper (4) und/oder das wenigstens eine Angriffsmittel (13) wenigstens teilweise, insbesondere vollständig, aus Metall, z. B. Stahl, besteht und/oder
mit dem Ankersystem ein Verfahren gemäß einem oder mehrerer der Ansprüche 11 bis 15 ausführbar ist.

11. Verfahren zur Befestigung eines Hinterschnittankersystems (1), insbesondere eines Hinterschnittankersystems (1) gemäß einem oder mehreren der vorhergehenden Ansprüche, mit den Schritten:
- Einführen eines Hinterschnittankers (2) in ein Bohrloch (18),
- Verbinden des Hinterschnittankers (2) mit einem Setzgerät (26),
- Aufbringen eines Drehmomentes mit dem Setzgerät (26) auf eine Spreizhülse (5), so dass die Spreizhülse (5) in eine Rotationsbewegung gebracht wird,
- Aufbringen einer axialen Druckkraft auf die Spreizhülse (5), sodass die Spreizhülse (5) axial in Richtung zu dem Spreizkörper (4) bewegt wird und die Spreizhülse (5) von dem Spreizkörper (4) aufgespreizt wird,
- Abbrechen der axialen Bewegung und Rotationsbewegung der Spreizhülse (5), wenn eine vorgegebenen axiale Endlage der Spreizhülse (5) relativ zu einem Ankerbolzen (3) erreicht wird,
**dadurch gekennzeichnet, dass**
die axiale Endlage mit einem Sensor (21) erfasst wird.

12. Verfahren nach Anspruch 11,
**dadurch gekennzeichnet, dass**
mit dem Sensor (21) ein Sensorelement (22) an dem Ankerbolzen (3), insbesondere optisch, magnetisch, mechanisch, induktiv oder kapazitiv, erfasst wird
und/oder
der Sensor (21) mit elektrischen Strom betrieben wird.

13. Verfahren nach Anspruch 11 oder 12,
**dadurch gekennzeichnet, dass**
der Sensor (21) in Wirkverbindung mit dem Setzgerät (26) steht und bei Erreichen der von dem Sensor (21) erfassten vorgegebenen axiale Endlage der Spreizhülse(5) relativ zu einem Ankerbolzen (3) das Setzgerät (26) automatisch abgeschaltet wird.

14. Verfahren nach einem oder mehreren der Ansprüche 11 bis 13,
**dadurch gekennzeichnet, dass**
eine Identifzierungseinrichtung (27), z. B. ein Barcode (28) oder ein RFID-Chip, an einem Hinterschnittanker (2) von einer Einrichtung (29) ausgelesen wird und in Abhängigkeit von den ausgelesenen Daten die von dem Sensor (21) erfassten Daten ausgewertet werden.

15. Verfahren nach Anspruch 14,
**dadurch gekennzeichnet, dass**
die von dem Sensor (21) erfassten Daten, insbesondere Daten bezüglich der vorgegebenen axialen Endlage, für den mitttels der Identifizierungseinrichtung (27) identifzierten Hinterschnittanker (2) gespeichert werden, z. B. in einem Datenspeicher in einem Sensorgerät (25) oder dem Setzgerät (26).

## Claims

1. Anchor system, for example an undercut anchor system (1), comprising
- an anchor bolt (3) with a spreader body (4),
- an expansion sleeve (5) surrounding the anchor bolt (3),
- preferably at least one engagement means (13) on the anchor bolt (3) or expansion sleeve (5), for load bearing,
- means (20) for detecting an axial end position of the expansion sleeve (5) on the spreader body (4) during the expansion and axial movement of the expansion sleeve (5),
**characterized in that**
the means (20) comprise a sensor (21) for detecting the axial end position.

2. Anchor system according to Claim 1,
**characterized in that**
the sensor (21) is an optical, magnetic, mechanical, inductive or capacitive sensor (21) and/or
the means comprise a processor, e.g. a microcontroller, and/or a data memory.

3. Anchor system according to Claim 1 or Claim 2,
**characterized in that**
a sensor element (22) which is detectable by the sensor (21) is arranged on the anchor bolt (3).

4. Anchor system according to Claim 3,
**characterized in that**
if the sensor (21) is an optical sensor, the sensor element (22) is a marker (23) or code (24); if a magnetic sensor, the sensor element (22) is a permanent magnet; if a mechanical sensor, the sensor element (22) is mechanically detectable geometry, e.g. a recess; if a capacitive sensor, the sensor element (22) is a plate of a capacitor.

5. Anchor system according to one or more of the preceding claims,
**characterized in that**
the anchor system comprises a sensor device (25), and the means (20) are arranged on a separate sensor device (25).

6. Anchor system according to one or more of the preceding claims,
**characterized in that**
the anchor system comprises a setting tool (26), and the means (20) are arranged on the setting tool (26).

7. Anchor system according to one or more of the preceding claims,
**characterized in that**
an anchor, in particular an undercut anchor (2), comprises the anchor bolt (3) and the expansion sleeve (5), and the anchor, in particular the anchor bolt (3) or the expansion sleeve (5), has an identification device (27), e.g. a barcode (28) or an RFID chip.

8. Anchor system according to Claim 7,
**characterized in that**
the sensor device (25) or the setting tool (26) with the means (20) has a device (29) for reading the identification device (27).

9. Anchor system according to one or more of the preceding claims,
**characterized in that**
the expansion sleeve (5) is expandable by an axial movement of the expansion sleeve (5) relative to the spreader body (4) by virtue of a conical geometry of the spreader body and/or
material at the borehole (18) can be abraded by means of the expanded expansion sleeve (5) by a rotational motion of the expansion sleeve (5).

10. Anchor system according to one or more of the preceding claims,
**characterized in that**
the anchor bolt (3) and/or the spreader body (4) and/or the at least one engagement means (13) are made at least partly, and in particular entirely, of metal, e.g. steel,
and/or
a method according to one or more of Claims 11 to 15 can be performed with the anchor system.

11. Method for fixing an undercut anchor system (1), in particular an undercut anchor system (1) according to one or more of the preceding claims, comprising the steps of:
- insertion of an undercut anchor (2) into a borehole (18),
- connection of a setting tool (26) to the undercut anchor (2),
- application of torque to an expansion sleeve (5) with the setting tool (26) so that the expansion sleeve (5) is set in rotational motion,
- application of axial pressure force to the expansion sleeve (5) so that the expansion sleeve (5) is moved axially towards the spreader body (4) and is expanded by the spreader body (4),
- termination of the axial motion and rotational motion of the expansion sleeve (5) when a predetermined axial end position of the expansion sleeve (5) relative to an anchor bolt (3) is reached,
**characterized in that**
the axial end position is detected by means of a sensor (21).

12. Method according to Claim 11,
**characterized in that**
a sensor element (22) on the anchor bolt (3) is detected, in particular optically, magnetically, mechanically, inductively, or capacitively, by means of the sensor (21)
and/or
the sensor (21) is operated by electrical current.

13. Method according to Claim 11 or Claim 12,
**characterized in that**
the sensor (21) is operatively connected to the setting tool (26), and the setting tool (26) is automatically switched off when the predetermined axial end position of the expansion sleeve (5) relative to an anchor bolt (3), as detected by the sensor (21), is reached.

14. Method according to one or more of Claims 11 to 13,
**characterized in that**
an identification device (27), e.g. a barcode (28) or an RFID chip, on an undercut anchor (2) is read by a device (29) and the data acquired by the sensor (21) are evaluated as a function of the reading obtained.

15. Method according to Claim 14,
**characterized in that**
the data acquired by the sensor (21), in particular data on the predetermined axial end position, are stored for the undercut anchor (2) identified by means of the identification device (27), e.g. in a data memory in a sensor device (25) or in the setting tool (26).

## Revendications

1. Système d'ancrage, par exemple un système d'ancrage à contre-dépouille (1), comprenant :
- un boulon d'ancrage (3) avec un élément d'expansion (4),
- une douille d'expansion (5) entourant le boulon d'ancrage (3),
- de préférence au moins un mécanisme de prise (13) sur le boulon d'ancrage (3) ou sur la douille d'expansion (5) pour supporter une charge,
- des moyens (20) pour détecter une position de fin de course axiale de la douille d'expansion (5) sur l'élément d'expansion (4) lors d'un écartement et d'un mouvement axial de la douille d'expansion (5),
**caractérisé en ce que**
les moyens (20) comprennent un capteur (21) pour détecter la position de fin de course axiale.

2. Système d'ancrage selon la revendication 1,
**caractérisé en ce que**
le capteur (21) est un capteur optique, magnétique, mécanique, inductif ou capacitif
et/ou
les moyens comprennent un processeur, par exemple un microcontrôleur et/ou une mémoire de données.

3. Système d'ancrage selon la revendication 1 ou 2,
**caractérisé en ce que**
sur le boulon d'ancrage (3) est agencé un élément capteur (22) qui peut être détecté par le capteur (21).

4. Système d'ancrage selon la revendication 3,
**caractérisé en ce que**
l'élément capteur (22) est un marquage (23) ou un code (24) pour un capteur optique (21), ou un aimant permanent pour un capteur magnétique, ou une géométrie mécaniquement détectable, par exemple une cavité, pour un capteur mécanique ou une plaque d'un condensateur pour un capteur capacitif.

5. Système d'ancrage selon une ou plusieurs des revendications précédentes,
**caractérisé en ce que**
le système d'ancrage comporte un appareil à capteur (25) et les moyens (20) sont agencés sur un appareil à capteur (25) particulier.

6. Système d'ancrage selon une ou plusieurs des revendications précédentes,
**caractérisé en ce que**
le système d'ancrage comprend un appareil de pose (26) et les moyens (20) sont agencés sur l'appareil de pose (26).

7. Système d'ancrage selon une ou plusieurs des revendications précédentes,
**caractérisé en ce que**
un ancrage, en particulier un ancrage à contre-dépouille (2), comprend le boulon d'ancrage (3) et la douille d'expansion (5) et l'ancrage, en particulier le boulon d'ancrage (3) ou la douille d'expansion (5), présente un dispositif d'identification (27), par exemple un code à barres (28) ou une puce RFID.

8. Système d'ancrage selon la revendication 7,
**caractérisé en ce que**
l'appareil à capteur (25) ou l'appareil de pose (26) avec les moyens (20) présente un dispositif (29) pour lire le dispositif d'identification (27).

9. Système d'ancrage selon une ou plusieurs des revendications précédentes,
**caractérisé en ce que**
la douille d'expansion (5) peut être écartée au moyen d'un mouvement axial de la douille d'expansion (5) par rapport à l'élément d'expansion en raison d'une géométrie conique de l'élément d'expansion (4),
et/ou
du fait d'un mouvement de rotation de la douille d'expansion (5), le matériau peut être retiré du trou percé (18) au moyen de la douille d'expansion (5) expansée.

10. Système d'ancrage selon une ou plusieurs des revendications précédentes,
**caractérisé en ce que**
le boulon d'ancrage (3) et/ou l'élément d'expansion (4) et/ou le au moins un mécanisme de prise (13) est(sont) constitué(s) au moins partiellement, en particulier entièrement, de métal, par exemple de l'acier
et/ou
un procédé selon une ou plusieurs des revendications 11 à 15 peut être mis en oeuvre avec le système d'ancrage.

11. Procédé pour fixer un système d'ancrage à contre-dépouille (1), en particulier un système d'ancrage à contre-dépouille (1) selon une ou plusieurs des revendications précédentes, comportant les étapes consistant à :
- introduire un ancrage à contre-dépouille (2) dans un trou percé (18),
- relier l'ancrage à contre-dépouille (2) à un appareil de pose (26),
- appliquer un couple avec l'appareil de pose (26) sur une douille d'expansion (5), de telle sorte que la douille d'expansion (5) soit amenée à effectuer un mouvement de rotation,
- appliquer une force de pression axiale sur la douille d'expansion (5), de telle sorte que la douille d'expansion (5) soit déplacée axialement en direction de l'élément d'expansion (4) et que la douille d'expansion (5) soit écartée par l'élément d'expansion (4),
- interrompre le mouvement axial et le mouvement de rotation de la douille d'expansion (5) lorsqu'une position de fin de course axiale prédéfinie de la douille d'expansion (5) par rapport à un boulon ancrage (3) est atteinte,
**caractérisé en ce que**
la position de fin de course axiale est détectée à l'aide d'un capteur (21).

12. Procédé selon la revendication 11,
**caractérisé en ce que**
un élément capteur (22) est détecté avec le capteur (21) sur le boulon d'ancrage (3), en particulier de manière optique, magnétique, mécanique, inductive au capacitive,
et/ou
le capteur (21) fonctionne avec du courant électrique.

13. Procédé selon la revendication 11 ou 12,
**caractérisé en ce que**
le capteur (21) est en liaison active avec l'appareil de pose (26) et lorsque la position de fin de course axiale prédéfinie de la douille d'expansion (5) par rapport à un boulon d'ancrage (3), détectée par le capteur (21), est atteinte, l'appareil de pose (26) est automatiquement arrêté.

14. Procédé selon une ou plusieurs des revendications 11 à 13,
**caractérisé en ce que**
un dispositif d'identification (27), par exemple un code à barres (28) ou une puce RFID, est lu sur un ancrage à contre-dépouille (2) par un dispositif (29) et des données détectées par le capteur (21) sont évaluées en fonction des données lues.

15. Procédé selon la revendication 14,
**caractérisé en ce que**
les données détectées par le capteur (21), en particulier des données concernant la position de fin de course axiale prédéfinie, sont mémorisées pour l'ancrage à contre-dépouille (2) identifié au moyen du dispositif d'identification (27), par exemple dans une mémoire de données dans un appareil à capteur (25) ou dans l'appareil de pose (26).
